**Europäisches Patentamt**

**European Patent Office**

**Office européen des brevets**

(19)

(11) Veröffentlichungsnummer : **0 047 540**
**B1**

(12) **EUROPÄISCHE PATENTSCHRIFT**

(45) Veröffentlichungstag der Patentschrift :
25.07.84

(21) Anmeldenummer : **81200852.2**

(22) Anmeldetag : **28.07.81**

(51) Int. Cl.³ : **C 01 B 17/79**, **B 01 J 23/22**

(54) Verfahren zur Herstellung eines V2O5 und Alkalisulfat enthaltenden Katalysators.

(30) Priorität : **04.09.80 DE 3033319**

(43) Veröffentlichungstag der Anmeldung :
**17.03.82 Patentblatt 82/11**

(45) Bekanntmachung des Hinweises auf die Patenterteilung : **25.07.84 Patentblatt 84/30**

(84) Benannte Vertragsstaaten :
**BE DE FR GB IT LU NL**

(56) Entgegenhaltungen :
**EP-A- 0 019 174**
**DE-A- 2 057 251**
**DE-B- 1 086 218**
**US-A- 3 275 406**

(73) Patentinhaber : **METALLGESELLSCHAFT AG**
**Reuterweg 14 Postfach 3724**
**D-6000 Frankfurt/M.1 (DE)**

(72) Erfinder : **Fennemann, Wolfgang**
**Vilbeler Strasse 29**
**D-6367 Karben 6 (DE)**
Erfinder : **Sander, Ulrich, Dr. Dipl.-Chem.**
**Taunusstrasse 16**
**D-6382 Friedrichsdorf (DE)**
Erfinder : **Bick, Manfred, Dr. Dipl.-Chem.**
**Eichenstrasse 23**
**D-6370 Oberursel/Stierstadt (DE)**

(74) Vertreter : **Fischer, Ernst, Dr.**
**Reuterweg 14**
**D-6000 Frankfurt am Main 1 (DE)**

# 0 047 540

**Beschreibung**

Die Erfindung betrifft ein Verfahren zur Herstellung eines $V_2O_5$ und Alkalisulfat enthaltenden Katalysators zur Oxidation von $SO_2$ zu $SO_3$, wobei das molare Verhältnis $V_2O_5$ zu Alkalisulfat kleiner als 1 ist, durch Tränken vorgefertigter Trägerkörper mit die Aktivsubstanzen enthaltenden Lösungen und anschließender Trocknung der getränkten Trägerkörper.

Die katalytische Umsetzung von $SO_2$ mit Sauerstoff zu $SO_3$ in Kontaktanlagen erfolgt heute mit Hilfe von Katalysatoren, die $V_2O_5$ und Alkalisulfat als Aktivsubstanz enthalten. Diese Katalysatoren müssen einen hohen Umsatz von $SO_2$ zu $SO_3$ erzielen, die Umsatztemperatur soll niedrig liegen, sie sollen eine geringe Anfälligkeit gegen höhere Temperaturen und eine gute mechanische Festigkeit haben. Diese Eigenschaften hängen weitgehend von ihrer Herstellung ab.

Aus der FR-PS 538 139 ist es bekannt, Trägerkörper mit schwefelsaurer, reiner Vanadinlösung zu tränken. Der Katalysator erzielte jedoch nur einen Umsatz von unter 95 % und die erforderliche Katalysatormenge pro tato $H_2SO_4$ betrug etwa 1 000 l. Diese schlechten Eigenschaften sind wahrscheinlich der Grund, warum eine saure Tränkung in der Folgezeit nicht mehr angewendet wurde.

Aus B. Waeser « Die Schwefelsäurefabrikation », 1961, Verlag Friedrich Vieweg und Sohn Braunschweig, Seiten 252-258 sowie DE-B-12 81 407, DE-A-15 42 177, AT-PS 116 361, US-A-1 941 426 ist es bekannt, Trägerkörper mit alkalischen oder neutralen Lösungen zu tränken, die $V_2O_5$ und Alkaliverbindungen enthalten. Bei der alkalischen Tränkung besteht die Gefahr des chemischen Angriffs auf den $SiO_2$-Gehalt der Trägerkörper, wodurch die mechanische Festigkeit und die innere Oberfläche verringert werden. Bei neutraler Tränkung muß wegen der schlechten Löslichkeit der aktiven Substanzen eine mehrmalige Tränkung und Trocknung erfolgen. Dadurch wird die Einstellung eines exakten Gehaltes an Aktivsubstanzen erschwert und die Herstellung ist aufwendig.

Aus B. Waeser « Die Schwefelsäurefabrikation », 1961 ist es auch bekannt, Kieselgur mit Lösungen der Aktivsubstanzen anzuteigen und daraus die Katalysatorkörper herzustellen. Es ist dabei schwierig, Körper einheitlicher Zusammensetzung herzustellen, und die Gefahr von Fehlchargen ist groß.

Der Erfindung liegt die Aufgabe zugrunde, einen Katalysator in einfacher Weise herzustellen, wobei sichergestellt ist, daß die Katalysatorkörper stets eine gleichbleibende Zusammensetzung, hohe innere Oberfläche und gute mechanische Festigkeit aufweisen, einen sehr guten Umsatz von $SO_2$ zu $SO_3$, auch bei niedrigen Temperaturen, erzielen und auch bei höheren Umsatztemperaturen stabil sind.

Diese Aufgabe wird erfindungsgemäß dadurch gelöst, daß die Tränklösung pro Liter 600-1 100 g $H_2SO_4$ und 140-830 g $V_2O_5$ und Alkalisulfat enthält, die Tränkung bei einer Temperatur zwischen 60 °C und der jeweiligen Siedetemperatur der Tränklösung erfolgt und die getränkten Trägerkörper unter Bewegung getrocknet werden.

Die Temperatur und Schwefelsäurekonzentration wird bei der Tränkung in dem angegebenen Bereich so eingestellt, daß innerhalb des Verarbeitungszeitraumes keine Kristallisation und/oder Hydrolyse der Aktivsubstanzen eintritt. Bei Tränklösungen, die über mehrere Tage stabil sein sollen, muß die Schwefelsäurekonzentration in einem sehr engen optimalen Bereich eingestellt werden. Für Tränklösungen, die kurz nach ihrer Herstellung verbraucht werden, kann dieser optimale Bereich unter- oder überschritten werden. Die Temperatur ist abhängig von der Konzentration an Aktivsubstanzen und deren chemische Zusammensetzung. Je höher die Konzentration an Aktivsubstanz ist, um so enger ist der mögliche Temperaturbereich. Bei hoher Konzentration ist praktisch nur eine genau definierte Temperatur möglich. Bei niedrigerer Konzentration kann diese Temperatur unter- bzw. überschritten werden. Auch für die Temperatur gilt, daß bei Lösungen, die sofort nach der Herstellung verbraucht werden, ein größerer Temperaturbereich gewählt werden kann. Zum Verständnis dieser Zusammenhänge wird auf die Tabellen verwiesen. Diese zeigen die Abhängigkeiten für Lösungen, die längere Zeit stabil sind. Für kurzzeitig stabile Lösungen gelten die oben angeführten Grenzen. Als Alkalisulfate können $Na_2SO_4$, $K_2SO_4$, $Cs_2SO_4$, $Rb_2SO_4$ alleine oder in Mischungen verwendet werden. Die vorgefertigten Trägerkörper sollen folgende Eigenschaften aufweisen :

a) $SiO_2$-Gehalt über 90 %, vorzugsweise über 97 %,

b) innere Oberfläche (nach BET) über 10 $m^2/g$, vorzugsweise 20-200 $m^2/g$,

c) Korngröße 2-12 mm, vorzugsweise 4-8 mm,

d) mechanische Druckfestigkeit über 2 kg/Körper,

e) mechanische Abriebfestigkeit unter 1 %, vorzugsweise unter 0,5 %.

Eine vorzugsweise Ausgestaltung besteht darin, daß die Trägerkörper einen $V_2O_5$-Gehalt von 5-10 Gew.-% und ein molares Verhältnis von $V_2O_5$ zu Alkalisulfat von 0,67 bis 0,29 enthalten. Dadurch werden gute Umsatzaktivitäten erzielt. Eine vorzugsweise Ausgestaltung besteht darin, daß die Tränklösung 800-1 000 g $H_2SO_4$ pro Liter, vorzugsweise 850-950 g $H_2SO_4$ pro Liter, enthält. Der größere Bereich ergibt bereits eine gute Sicherheit, daß keine Kristallisation oder Hydrolyse eintritt, während der enge Bereich diese auch für längere Gebrauchszeiten der Tränklösung sicherstellt.

Eine vorzugsweise Ausgestaltung besteht darin, daß die Tränklösung 275-720 g $V_2O_5$ und Alkalisulfat pro Liter enthält. Dadurch läßt sich eine Tränklösung mit hoher Konzentration an Aktivsubstanzen mit guter Sicherheit gegen Kristallisation oder Hydrolyse herstellen.

2

**0 047 540**

Eine vorzugsweise Ausgestaltung besteht darin, daß als Alkalisulfat ein Gemisch von $K_2SO_4$ und $Cs_2SO_4$ mit einem molaren Anteil des $Cs_2SO_4$ von 5-30 %, vorzugsweise 10-20 %, verwendet wird. Diese Aktivsubstanz ergibt Katalysatoren mit hohen Umsatzaktivitäten bei niedrigen Temperaturen.

Eine vorzugsweise Ausgestaltung besteht darin, daß die Trägerkörper vor der Tränkung mindestens auf die Mindest-temperatur der Tränklösung vorgewärmt werden. Die Mindesttemperatur ist die Temperatur der Tränklösung, die unterhalb der Kristallisation und/oder Hydrolyse eintritt. Durch die Vorwärmung der Trägerkörper wird vermieden, daß an der Oberfläche der Trägerkörper Kristallisation oder Hydrolyse eintritt und die Eigenschaften des Katalysators verschlechtert.

Eine vorzugsweise Ausgestaltung besteht darin, daß die Trägerkörper in die im Überschuß vorgelegte Tränklösung eingebracht, mindestens 2 min, vorzugsweise 10-30 min, untergetaucht und dann von der nicht aufgenommenen Tränklösung abgetrennt werden. Dadurch wird eine gleichmäßige Tränkung der Trägerkörper erzielt, ohne daß die Menge der Tränklösung genau dosiert werden muß.

Eine vorzugsweise Ausgestaltung besteht darin, daß die Trägerkörper mit einer Menge an Tränklösung getränkt werden, die maximal der Menge entspricht, die von den Trägerkörpern aufgesaugt werden kann, vorzugsweise 90-95 % der aufsaugbaren Menge. In diesem Fall werden die Trägerkörper bewegt, damit eine gleichmäßige Tränkung erfolgt. Durch diese Ausgestaltung ist kein Abtrennen der Trägerkörper von überschüssiger Tränklösung erforderlich, und es kann mit Tränklösungen gearbeitet werden, die nur kürzere Zeiten beständig sind. Die Trägerkörper enthalten keine überschüssige Tränklösung.

Eine vorzugsweise Ausgestaltung besteht darin, daß die Trocknung der getränkten Trägerkörper in einer ersten Stufe bei Unterdruck bis Normaldruck bei 120-200 °C, vorzugsweise bei 25-100 mbar und 140-180 °C, erfolgt und dabei mehr als 50 %, vorzugsweise 60-90 %, der mit der Tränklösung eingebrachten Wassermenge verdampft werden und anschließend in einer zweiten Stufe die Fertigtrocknung für mindestens 15 min bei Temperaturen von 250-700 °C, vorzugsweise bei 300-400 °C, erfolgt. Dadurch wird eine gleichmäßige Verteilung der nach der Trocknung verbleibenden Aktivsubstanzen über das gesamte Volumen der Trägerkörper erzielt.

Eine vorzugsweise Ausgestaltung besteht darin, daß die Aktivsubstanzen durch einmaliges Tränken der Trägerkörper aufgebracht werden. Dadurch wird eine gleichmäßige Tränkung mit geringem Aufwand erzielt.

Die Erfindung wird anhand von Beispielen näher erläutert.

Es wurden kugelförmige Trägerkörper mit folgenden Eisenschaften verwendet :

| | |
|---|---|
| Durchmesser | 5-5,5 mm |
| mittlerer Durchmesser | 5,25 mm |
| $SiO_2$-Gehalt | 98 % |
| Schüttdichte | 540 g/l (getrocknet) |
| Druckfestigkeit | ca. 4 kg/Kugel |
| äußere Oberfläche | 0,64 $m^2$/l |
| innere Oberfläche (nach BET) | 130-150 $m^2$/l |
| Abriebverlust | 0,3 % nach 3 × 10 min |
| Porosität | 100 g nehmen ca. 72 g Wasser auf |

Die Zusammensetzung des Katalysators sollte, ohne Berücksichtigung des $SO_3$- und $H_2SO_4$-Gehaltes, sein :

8,00 Gew.-% $V_2O_5$
19,16 Gew.-% $K_2SO_4$
72,84 Gew.-% Trägerkugeln

Es wurde mit drei verschiedenen Tränklösungen gearbeitet, wobei rechnerisch jede Lösung dieselben Mengen Aktivsubstanzen (152,5 g $V_2O_5$/l ; 197,5 g $K_2O$/l) enthielt, jedoch jeweils in anderer chemischer Form.

Tränklösung 1

Herstellung durch Auflösen von 196,2 g $NH_4VO_3$ in Kalilauge (KOH-Inhalt 235,3 g), Verkochen des entstehenden $NH_3$ und Auffüllen mit $H_2O$ auf 1 l.

Ergebnis :

152,5 g $V_2O_5$/l
235,3 g KOH/l bzw.
231,5 g $KVO_3$/l
141,2 g KOH/l

3

# 0 047 540

Die Lösung war bei Raumtemperatur stabil, deshalb erfolgte die Tränkung mit dieser Lösung bei Raumtemperatur.

## Tränklösung 2

Herstellung durch Auflösen von 196,2 g $NH_4VO_3$ in Kalilauge (KOH-Inhalt 94,1 g), Verkochen des entstehenden $NH_3$, Zugabe von 173,9 g $K_2CO_3$ und Überführen in klare Lösung durch Auffüllen mit $H_2O$ auf 1 l.

Ergebnis :

152,5 g $V_2O_5$/l
94,1 g KOH/l
173,9 g $K_2CO_3$/l bzw.
231,5 g $KVO_3$/l
173,9 g $K_2CO_3$/l

Die Lösung war bei Raumtemperatur stabil, deshalb erfolgte die Tränkung mit dieser Lösung bei Raumtemperatur.

## Tränklösung 3

Herstellung durch Auflösen von 152,5 g $V_2O_5$ in 150 g $H_2O$ und 900 g konzentriertem $H_2SO_4$, Zugabe von 364,9 g $K_2SO_4$ und Überführen in klare Lösung durch Auffüllen mit $H_2O$ auf 1 l bei erhöhter Temperatur.

Ergebnis :

152,5 g $V_2O_5$/l
364,9 g $K_2SO_4$/l
900 g $H_2SO_4$/l

Zur Vermeidung von Kristallisation oder Hydrolyse wurde die Tränklösung auf eine Temperatur von 115 °C eingestellt. Die Tränkung erfolgte mit dieser Temperatur, wobei die Trägerkörper ebenfalls auf 115 °C vorgewärmt wurden.

Die Trägerkugeln wurden 30 min mit den Tränklösungen behandelt, die überschüssige Lösung abgegossen, die Kugeln bei 150 °C im Wasserstrahlvakuum 60 min lang getrocknet, wobei 70 bis 90 % der mit der Tränklösung eingebrachten Wassermenge verdampft wurden, und bei 300 °C 120 min lang getempert. Die Analyse bestätigte gleiche Relationen von V : K : Si.

Die Katalysatoren hatten folgende Eigenschaften (die Ziffern entsprechender Tränklösung, mit der sie hergestellt wurden) :

## Katalysator 1

Mehr als die Hälfte aller Kugeln war rissig bzw. zersprungen. Der Abrieb betrug 7-8 %. Da ein Vergleichsversuch mit Wasser als Tränklösung keine Schädigung der Kugeln ergab (Abrieb unter 0,1 %), wird die Verschlechterung der mechanischen Festigkeit auf den chemischen Angriff der stark alkalischen Tränklösung auf den $SiO_2$-Träger zurückgeführt. Auf eine Messung der Umsatzaktivität wurde verzichtet.

## Katalysator 2

Durch den Austausch der freien KOH durch das weniger basische $K_2CO_3$ konnte äußerlich kein Angriff der Trägerkugeln festgestellt werden. Eine Prüfung nach der Standard-Methode ergab jedoch keine befriedigende Umsatzaktivität.

| | |
|---|---|
| Umsatz max. | 95 % bei 450-455 °C |
| Abrieb | 0,1-0,8 % |
| Druckfestigkeit | 7-8 kg/Kugel |

Ein weiteres Absenken der Alkalität durch Austausch des $K_2CO_3$ durch $K_2SO_4$ gelang wegen der schlechten Löslichkeit nicht.

## Katalysator 3

Der Katalysator 3 konnte ohne Sulfatisierung direkt verwendet werden, während die Katalysatoren 1

4

# 0 047 540

und 2 vor dem Einsatz wegen ihrer alkalischen Reaktion sulfatisiert (formiert, neutralisiert) werden müssen. Dieser Katalysator hatte folgende sehr guten Eigenschaften :

| Abrieb | unter 0,1 % |
| Druckfestigkeit | 11 kg/Kugel |
| Umsatz max. | 98,64 % bei 420 °C |

## Katalysator 4

In der Tränklösung 3 wurde das $K_2SO_4$ partiell durch $Cs_2SO_4$ ausgetauscht. Dadurch wurde eine deutliche Zunahme der Umsatzaktivität und der Thermostabilität erzielt.

Steigerung der Umsatzaktivität :

| Mol Cs (%) | U max. (%) | Temp. (°C) | Abrieb (%) |
|---|---|---|---|
| 0 | 98,64 | 420 | |
| 2 | 98,72 | 420 | |
| 4 | 98,73 | 420 | |
| 6 | 98,73 | 420 | unter 0,1 |
| 10 | 98,80 | 420 | |
| 15 | 98,94 | 415 | |
| 20 | 98,90 | 410 | |
| 30 | 98,92 | 405 | |

Steigerung der Thermostabilität :

Es wurde 260 Stunden bei 680 °C an Luft getempert. Dabei ergaben sich folgende Umsatzaktivitäten :

| Mol Cs (%) | U max. (%) | Temp. (°C) | Abrieb (%) |
|---|---|---|---|
| 0 | 98,37 | 435 | |
| 2 | 98,36 | 435 | |
| 6 | 98,58 | 430 | 0,2 – 0,4 |
| 10 | 98,66 | 435 | |
| 15 | 98,72 | 425 | |

Zum Vergleich wurden handelsübliche Katalysatoren untersucht, die einen vergleichbaren Gehalt an Aktivsubstanzen, jedoch kein Cs enthielten und durch Strangpressen hergestellt waren.

Katalysator für normale Arbeitstemperaturen :

U max  98,34 % bei  430 °C
Abrieb    1,0 %

nach Tempern bei 680 °C für 260 h änderten sich diese Werte wie folgt :

U max  97,97 % bei  440 °C
Abrieb  16    %

Katalysator für niedrige Arbeitstemperaturen :

U max  98,64 % bei  420 °C
Abrieb    0,4 %

nach Tempern bei 680 °C für 260 h änderten sich diese Werte wie folgt :

U max  98,25 % bei  435 °C
Abrieb  21    %

In den folgenden Tabellen wird die Stabilität von sauren Tränklösungen in Abhängigkeit von der Temperatur, dem Gehalt an $H_2SO_4$ und Aktivsubstanzen dargestellt. Die Bezeichnung « + » bedeutet, daß

5

## 0 047 540

die Tränklösung nach 2 Tagen keine Kristallisations- oder Hydrolyseerscheinung zeigte, während bei « — » solche Erscheinungen auftraten.

### Tabelle 1

Tränklösung : 152,5 g $V_2O_5$/l
364,9 g $K_2SO_4$/l

| Temperatur ($^\circ$C) | $H_2SO_4$-Gehalt (g/l) | | | |
|---|---|---|---|---|
| | 700 | 800 | 900 | 1000 |
| Siedepunkt | 130 | 138 | 151 | 160 |
| 140 | entfällt | entfällt | - | - |
| 130 | entfällt | - | - | - |
| 120 | - | - | + | - |
| 110 | n.b. | n.b. | + | n.b. |
| 100 | - | - | - | - |
| 80 | - | - | - | - |
| | 840 | 860 | 940 | 960 |
| 120 | - | + | + | - |

### Tabelle 2

Tränklösung : 114,4 g $V_2O_5$/l
273,7 g $K_2SO_4$/l

| Temperatur ($^\circ$C) | $H_2SO_4$-Gehalt (g/l) | | | |
|---|---|---|---|---|
| | 700 | 800 | 900 | 1000 |
| Siedepunkt | 128 | 137 | 150 | 158 |
| 140 | entfällt | entfällt | + | - |
| 130 | n.b. | - | n.b. | n.b. |
| 120 | - | - | + | - |
| 100 | - | - | + | - |
| 80 | - | - | + | - |
| 60 | n.b. | n.b. | - | n.b. |

### Tabelle 3

Tränklösung : 76,3 g $V_2O_5$/l
182,5 g $K_2SO_4$/l

| Temperatur ($^\circ$C) | $H_2SO_4$-Gehalt (g/l) | | | |
|---|---|---|---|---|
| | 700 | 800 | 900 | 1000 |
| Siedepunkt | 125 | 136 | 147 | 157 |
| 140 | entfällt | entfällt | + | - |
| 120 | - | - | + | - |

6

### Tabelle 3 (Fortsetzung)

| Temperatur (°C) | H₂SO₄-Gehalt (g/l) | | | |
|---|---|---|---|---|
| | 700 | 800 | 900 | 1000 |
| 100 | – | – | ± | – |
| 80 | – | – | – | – |
| 60 | n.b. | n.b. | – | – |

### Tabelle 4

Tränklösung : 191 g $V_2O_5$/l
640 g $K_2SO_4$/l

| Temperatur (°C) | $H_2SO_4$-Gehalt (g/l) | | |
|---|---|---|---|
| | 800 | 900 | 1000 |
| 140 | – | – | – |
| 120 | – | – | – |
| 115 | – | + | – |
| 110 | – | – | – |

Bestimmung des Abriebs :

Ca. 50 g Kontaktmasse wurden abgewogen, in einen leeren 1 l-Porzellantopf einer Schwingmühle gegeben und dreimal 10 min geschüttelt. Nach jeweils 10 min wurde die Masse von den Feinanteilen unter 0,5 mm abgesiebt und weiterbehandelt. Der Abrieb wurde durch Wiegen der Kontaktmasse-Kerne ermittelt und in Gew.-% angegeben.

Bestimmung der Umsatzaktivität :

Die Prüfapparatur besteht aus einem doppelmanteligen Rohr, das außen mit einer elektrischen Heizwicklung versehen ist. Das eintretende Gas durchströmt den Zwischenraum zwischen dem Prüfkontakt und dem Heizmantel und wird hierbei auf eine Eintrittstemperatur von ca. 500 °C aufgeheizt. Durch den Doppelmantel wird sichergestellt, daß jede Lokalüberhitzung der Masse ausgeschlossen ist. In der Mitte des Prüfkontaktes befindet sich ein verschiebbares Thermoelement. Die Temperaturen werden durch Veränderung der Heizwicklung bzw. durch Veränderung der Wärmeisolierung so eingestellt, daß der Temperaturabfall über die gesamte Masseschicht möglichst gleichmäßig verläuft. Als Umsatztemperatur wird die Temperatur 5 cm oberhalb der Siebplatte, auf der die Masse ruht, angegeben. Das Gas durchläuft also das gesamte Temperaturgebiet zwischen 500 °C und 380 °C. Der Umsatz wird bei fallender Temperatur in Zeitabständen von je 10 Minuten bestimmt und die erhaltenen Werte auf ein Diagramm, bei dem gleichzeitig auch der theoretische Gleichgewichtsumsatz mit angegeben wird, aufgetragen.

Die Vorteile der Erfindung bestehen darin, daß in einfacher Weise Katalysatoren mit sehr guten Eigenschaften hergestellt werden können, die eine völlig gleichmäßig und beliebig wählbare Zusammensetzung haben. Die Katalysatoren erzielen hohe Umsatzaktivitäten bei niedrigen Temperaturen und sind auch bei hohen Temperaturen mechanisch stabil. Es können billige Ausgangsstoffe für die Aktivsubstanzen verwendet werden.

**Ansprüche**

1. Verfahren zur Herstellung eines $V_2O_5$ und Alkalisulfat enthaltenden Katalysators zur Oxidation von $SO_2$ zu $SO_3$, wobei das molare Verhältnis $V_2O_5$ zu Alkalisulfat kleiner als 1 ist, durch Tränken vorgefertigter Trägerkörper mit die Aktivsubstanzen enthaltenden Lösungen und anschließender Trocknung der getränkten Trägerkörper, dadurch gekennzeichnet, daß die Tränklösung pro Liter 600-1 100 g $H_2SO_4$ und 140-830 g $V_2O_5$ und Alkalisulfat enthält, die Tränkung bei einer Temperatur zwischen 60 °C und der jeweiligen Siedetemperatur der Tränklösung erfolgt und die getränkten Trägerkörper unter Bewegung getrocknet werden.

2. Verfahren nach Anspruch 1, dadurch gekennzeichnet, daß die Trägerkörper einen $V_2O_5$-Gehalt von 5-10 Gew.-% und ein molares Verhältnis von $V_2O_5$ zu Alkalisulfat von 0,67 bis 0,29 enthalten.

3. Verfahren nach Anspruch 1 oder Anspruch 2, dadurch gekennzeichnet, daß die Tränklösung 800-1 000 g $H_2SO_4$ pro Liter, vorzugsweise 850-950 g $H_2SO_4$ pro Liter, enthält.

4. Verfahren nach einem der Ansprüche 1 bis 3, dadurch gekennzeichnet, daß die Tränklösung 275-720 g $V_2O_5$ und Alkalisulfat pro Liter enthält.

5. Verfahren nach einem der Ansprüche 1 bis 4, dadurch gekennzeichnet, daß als Alkalisulfat ein Gemisch von $K_2SO_4$ und $Cs_2SO_4$ mit einem molaren Anteil des $Cs_2SO_4$ von 5-30 %, vorzugsweise 10-20 %, verwendet wird.

6. Verfahren nach einem der Ansprüche 1 bis 5, dadurch gekennzeichnet, daß die Trägerkörper vor der Tränkung mindestens auf die Mindesttemperatur der Tränklösung vorgewärmt werden.

7. Verfahren nach einem der Ansprüche 1 bis 6, dadurch gekennzeichnet, daß die Trägerkörper in die im Überschuß vorgelegte Tränklösung eingebracht, mindestens 2 min, vorzugsweise 10-30 min, untergetaucht und dann von der nicht aufgenommenen Tränklösung abgetrennt werden.

8. Verfahren nach einem der Ansprüche 1 bis 6, dadurch gekennzeichnet, daß die Trägerkörper mit einer Menge an Tränklösung getränkt werden, die maximal der Menge entspricht, die von den Trägerkörpern aufgesaugt werden kann, vorzugsweise 90-95 % der aufsaugbaren Menge.

9. Verfahren nach einem der Ansprüche 1 bis 8, dadurch gekennzeichnet, daß die Trocknung der getränkten Trägerkörper in einer ersten Stufe bei Unterdruck bis Normaldruck bei 120-200 °C, vorzugsweise bei 25-100 mbar und 140-180 °C, erfolgt und dabei mehr als 50 %, vorzugsweise 60-90 %, der mit der Tränklösung eingebrachten Wassermenge verdampft werden und anschließend in einer zweiten Stufe die Fertigtrocknung für mindestens 15 min bei Temperaturen von 250-700 °C, vorzugsweise bei 300-400 °C, erfolgt.

10. Verfahren nach einem der Ansprüche 1 bis 9, dadurch gekennzeichnet, daß die Aktivsubstanzen durch einmaliges Tränken der Trägerkörper aufgebracht werden.

**Claims**

1. A process of producing a catalyst which contains $V_2O_5$ and alkali sulfate and serves to oxidize $SO_2$ to $SO_3$ and in which the molar ratio of $V_2O_5$ to alkali metal sulfate is less than 1, wherein prefabricated support bodies are impregnated with solutions which contain the active substances and the impregnated support bodies are dried, characterized in that the impregnating solution contains per liter 600 to 1,100 grams $H_2SO_4$ and 140 to 830 grams $V_2O_5$ and alkali sulfate, that the impregnation is effected at a temperature between 60 °C and the boiling point of the impregnating solution employed and that the impregnated support bodies are moved as they are dried :

2. A process according to claim 1, characterized in that the support bodies contain 5 to 10 % by weight $V_2O_5$ and contain $V_2O_5$ to alkali sulfate in a molar ratio of 0.67 to 0.29.

3. A process according to claim 1 or 2, characterized in that the impregnating solution contains 800 to 1,000 grams $H_2SO_4$ per liter, preferably 850 to 950 g $H_2SO_4$ per liter.

4. A process according to any of claims 1 to 3, characterized in that the impregnating solution contains 275 to 720 g $V_2O_5$ and alkali sulfate per liter.

5. A process according to any of claims 1 to 4, characterized in that the alkali sulfate which is used consists of a mixture of $K_2SO_4$ and $Cs_2SO_4$ and the molar proportion of the $Cs_2SO_4$ in said mixture amounts to 5 to 30 %, preferably 10 to 20 %.

6. A process according to any of claims 1 to 5, characterized in that the support bodies are heated prior to the impregnation at least to the minimum temperature of the impregnating solution.

7. A process according to any of claims 1 to 6, characterized in that the support bodies are introduced into a surplus quantity of the impregnating solution and are immersed therein for at least 2 minutes and preferably for 10 to 30 minutes and are then separated from the impregnating solution which has not been absorbed. Before they are impregnated.

8. A process according to any of claims 1 to 6, characterized in that the support bodies are impregnated with impregnating solution in a quantity up to the quantity which can be absorbed by the support bodies and preferably in a quantity which is 90 to 95 % of the absorbable quantity.

9. A process according to any of claims 1 to 8, characterized in that the drying of the impregnated support bodies is effected in a first step at 120 to 200 °C and at a subatmospheric to normal pressure, preferably at 140 to 180 °C and 25 to 100 millibars, and more than 50 %, preferably 60 to 90 % of the quantity of water introduced with the impregnating solution are evaporated in said first step, which is succeeded by a second or final drying step carried out for at least 15 minutes at temperatures of 250 to 700 °C, preferably at 300 to 400 °C.

10. A process according to any of claims 1 to 9, characterized in that the active substances are introduced into the support bodies by a single impregnation.

**Revendications**

1. Procédé pour la préparation d'un catalyseur contenant du $V_2O_5$ et du sulfate d'alcali pour

l'oxydation de $SO_2$ en $SO_3$, le rapport molaire de $V_2O_5$ au sulfate d'alcali étant inférieur à 1, par imprégnation de corps de support préparés d'avance dans des solutions contenant les substances actives et par séchage subséquent des corps de support imprégnés, caractérisé par le fait que la solution d'imprégnation contient, par litre, 600 à 1 100 g de $H_2SO_4$ et 140 à 830 g de $V_2O_5$ et de sulfate d'alcali, par le fait que l'imprégnation est effectuée à une température comprise entre 60 °C et la température d'ébullition correspondante de la solution d'imprégnation et par le fait que les corps de support imprégnés sont séchés en mouvement.

2. Procédé selon la revendication 1 caractérisé en ce que les corps de support présentent une teneur en $V_2O_5$ de 5 à 10 % en poids et un rapport molaire de $V_2O_5$ au sulfate d'alcali compris entre 0,67 et 0,29.

3. Procédé suivant la revendication 1 ou 2 caractérisé en ce que la solution d'imprégnation contient 800 à 1 000 g de $H_2SO_4$ par litre, de préférence 850 à 950 g de $H_2SO_4$ par litre.

4. Procédé selon l'une quelconque des revendications 1 à 3 caractérisé en ce que la solution d'imprégnation contient 275 à 720 g de $V_2O_5$ et de sulfate d'alcali par litre.

5. Procédé selon l'une quelconque des revendications 1 à 3 caractérisé en ce qu'on utilise, à titre de sulfate d'alcali, un mélange de $K_2SO_4$ et de $Cs_2SO_4$ avec une fraction molaire de $Cs_2SO_4$ allant de 5 à 30 %, de préférence de 10 à 20 %.

6. Procédé selon l'une quelconque des revendications 1 à 5 caractérisé en ce qu'on préchauffe les corps de support au moins à la température minimum de la solution d'imprégnation avant l'imprégnation.

7. Procédé selon l'une quelconque des revendications 1 à 6 caractérisé en ce qu'on introduit les corps de support dans la solution d'imprégnation préparée en excès ; en ce qu'on les imprègne pendant au moins 2 minutes, de préférence de 10 à 30 minutes, et en ce qu'on les sépare ensuite de la solution d'imprégnation non absorbée.

8. Procédé selon l'une quelconque des revendications 1 à 6 caractérisé en ce qu'on imprègne les corps de support avec une quantité de solution d'imprégnation qui correspond au maximum à la quantité qui peut être absorbée par les corps de support, de préférence 90 à 95 % de la quantité absorbable.

9. Procédé selon l'une quelconque des revendications 1 à 8 caractérisé en ce qu'on effectue le séchage des corps de support imprégnés, dans une première étape, à dépression jusqu'à pression normale, entre 120 et 200 °C, de préférence entre 25 et 100 mbars et entre 140 et 180 °C, en ce qu'on évapore plus de 50 %, de préférence 60 à 90 %, de la quantité d'eau introduite avec la solution d'imprégnation et en ce qu'on effectue ensuite, dans une deuxième étape, le séchage final pendant au moins 15 minutes à des températures comprises entre 250 et 700 °C, de préférence entre 300 et 400 °C.

10. Procédé selon l'une quelconque des revendications 1 à 9 caractérisé en ce qu'on dépose les substances actives par imprégnation unique des corps de support.